(19) Europäisches Patentamt

European Patent Office

Office européen des brevets

(11) Publication number: 0 674 154 A1

## (12) EUROPEAN PATENT APPLICATION

(21) Application number: 95200582.5

(22) Date of filing: 09.03.95

(51) Int. Cl.6: G01F 1/34, G01F 1/36

(30) Priority: 09.03.94 NL 9400367

(43) Date of publication of application:
27.09.95 Bulletin 95/39

(84) Designated Contracting States:
AT BE CH DE DK FR GB LI LU NL

(71) Applicant: Bij de Leij, Jan Doeke
't Meer 124 A
NL-8448 GM Heerenveen (NL)

(72) Inventor: Bij de Leij, Jan Doeke
't Meer 124 A
NL-8448 GM Heerenveen (NL)

(74) Representative: de Bruijn, Leendert C. et al
Nederlandsch Octrooibureau
P.O. Box 29720
NL-2502 LS Den Haag (NL)

(54) **Method and device for determining the flow rate of a pumped fluid.**

(57) Method for determining the flow rate and the amount of an essentially incompressible fluid pumped in a line by a pump having a pump motor, which comprises the steps of measuring the total power taken up by the pump motor, measuring the pressure differential which occurs across the pump, introducing the measured values of said power and said pressure differential into a model derived from transport physics, and then calculating, by means of this model, the flow rate as a function of time. The model includes total power taken up by the pump motor, dissipated power of the pump, mass flow rate, pump pressure differential, density and a correction factor. The dissipated power and the correction factors can be assumed to be constant, and the density is determined separately, so that it is also possible for the volumetric flow rate to be determined. Based on the mass or volume flow rate, the amount by mass or volume is determined by integration over time.

The device for implementing the method comprises a pump incorporated in the line and having a pump motor, a measuring element for measuring the total power taken up by the pump motor, a pressure differential sensor for measuring the pressure differential across the pump, and a processing unit wherein, based on the model derived from transport physics and the power and the pressure differential measured, the flow rate is calculated as a function of time. A densimeter may be incorporated in the line.

fig-2

EP 0 674 154 A1

Rank Xerox (UK) Business Services
(3.10/3.09/3.3.4)

The invention relates to a method and device for determining the flow rate of an essentially incompressible fluid pumped in a line. Such a method and device are known in practice. They are used in applications such as in the food industry and/or in the process industry, where it is necessary, for the purpose of supply and/or processing, for the flow rate of a pumped fluid to be determined accurately. Often, these applications involve an initial volume measurement of the pumped fluid, after which the density of the fluid is determined separately or is assumed to be constant, to calculate the flow rate. In a different application, a weight measurement will be carried out rather than a volume measurement, to which end the fluid collected, for example, in a tank is weighed separately by means of load cells or in a measuring bridge. The abovementioned measurements are fairly laborious.

It is an object of the invention to enable a rapid and relatively simple determination of the flow rate of a pumped, essentially incompressible fluid, which method can be implemented at the same time as the pumping.

This is achieved, according to one aspect of the invention, for a method of the type mentioned in the preamble, by the following steps: measuring of the total power taken up by the pump motor, measuring the pressure differential which occurs across the pump, introducing the measured values of said power and said pressure differential into a model derived from transport physics, and then calculating, by means of this model, the flow rate as a function of time.

In a further embodiment, the model derived from transport physics is represented by:

$$W_m - W_o = \frac{Q_m \Delta p}{\rho} + A \frac{Q_m^3}{\rho^2},$$

*wherein*

$W_m$     = total power taken up by pump motor, i.e. total real (or active) power
$W_o$     = dissipated power (i.e. loss of power) of pump
$Q_m$     = mass flow rate
$\Delta p$     = pump pressure differential
$\rho$     = density, and
$A$     = correction factor.

In this case, the dissipated power $W_o$ and the correction factor A are assumed to be constant and the density $\rho$ is determined separately, it being possible, at the same time, for the volumetric flow rate to be determined from mass flow rate and density.

In accordance with the abovementioned method according to the invention, it is also possible, in the case of a batch-wise process, to obtain the amount in terms of mass or in terms of volume from the mass or volumetric flow rate by integration over time.

In a further embodiment of the method, the density is separately measured in a densimeter in the line. To this end, it is possible to employ advantageously, for example, a vibrating pipe, known per se and incorporated in the line. In the case of many incompressible fluids in industry, it is, however, also possible to assume the density to be a fixed constant, such as, for example, in the case of water or milk.

According to another aspect of the invention, the device for implementing the abovementioned method is provided with a pump incorporated in the line and having a pump motor, a measuring element for measuring the total power taken up by the pump motor, a pressure differential sensor for measuring the pressure differential across the pump, and a processing unit wherein, based on the model derived from transport physics and the power and the pressure differential measured, the flow rate is calculated as a function of time. The pressure differential sensor may be composed of two separate pressure sensors positioned on each side of the pump. The line may further have a densimeter incorporated therein. Although not strictly necessary for the determination of the flow rate, in a further embodiment the device may additionally be provided with one or more temperature sensors.

The abovementioned method and device at the same time provides a universal rough pump monitoring system and pump motor monitoring system. With such a monitoring system, the accuracy of the flow rate determination is somewhat less important, but a qualitative indication regarding the correct operation of the pump/pump motor system can still be obtained. In this context, deviations of, for example, the flow rate supplied, pump action or fluid parameters may then directly result in an alarm signal. The advantages of this monitoring system are the simplicity in terms of construction, consequently low cost price, low malfunction risk and simple assembly, certainly in relation to the large number of indicators concerning the correct operation of the pump/pump motor system, such as - apart from a determination of mass and quantity - for example electrical power taken up, mains voltage, mechanical output power, suction and discharge pressure and various temperatures, which can be obtained therewith.

The invention will be explained in more detail on the basis of an illustrative embodiment with reference to the drawings, wherein:

Figures 1a and 1b are schematic depictions of the general pump system used to derive the analytical model; and

Figure 2 shows a block diagram of the device according to the invention.

From physics, a number of laws are known which describe the flow of a fluid in a system, said laws, in an analytical form, indicating the relationship between various physical variables which affect the behaviour of the flow. Selecting only those relationships which describe the behaviour of the flow in a pump system or relevant section thereof, followed by rearrangement and simplification, produces an analytical model. With the aid of this abstract model, real behaviour is reproduced to reasonable accuracy, and the model can be used to calculate the flow rate from a small number of variables. The derivation of the said model from the general theory of transport physics is briefly explained below.

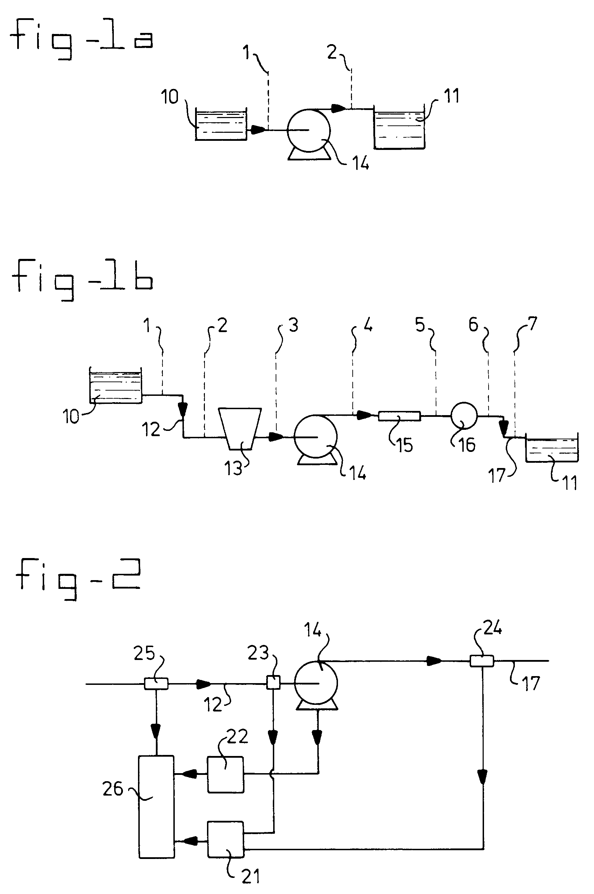

The system by means of which, at a supplier, a fluid such as milk is pumped with the aid of a pump 14 from the reservoir 10 to a tanker 11 can be depicted very schematically as shown in Figure 1a.

In order to calculate the pressure drop on line systems, it is then possible, assuming steady-state flow, to employ the so-called extended Bernoulli equation:

$$O = -\left[\int_1^2 \frac{1}{\rho} dp + g(h_2 - h_1) + \frac{1}{2}\left(\frac{\langle v_2^3 \rangle}{\langle v_2 \rangle} - \frac{\langle v_1^3 \rangle}{\langle v_1 \rangle}\right)\right] Q_m + W - A_{fr} Q_m \qquad (1)$$

$p$ = pressure [kg m$^{-1}$ s$^{-2}$]
$\rho$ = density [kg m$^{-3}$]
$g$ = acceleration due to gravity [m s$^{-2}$]
$h$ = height [m]
$v$ = flow velocity [m s$^{-1}$]
$Q_m$ = mass flow rate [kg s$^{-1}$]
$W$ = mechanical output power [kg m$^2$ s$^{-3}$]
$A_{fr}$ = mechanical friction dissipation [m$^2$ s$^{-2}$]
$\langle \bullet \rangle$ = averaging over cross-section

The subscripts of variables in equation (1) relate to the measuring points 1 and 2 in Figure 1a.

Particularly in the case of turbulent flow, the following simplification is permissible:

$$\frac{\langle v_2^3 \rangle}{\langle v_2 \rangle} - \frac{\langle v_1^3 \rangle}{\langle v_1 \rangle} \approx \langle v_2 \rangle^2 - \langle v_1 \rangle^2 \qquad (2)$$

Turbulent flow certainly occurs in a straight round pipe, if the Reynolds number Re is greater than 4000.

$$Re = \frac{\rho \langle v \rangle D}{\eta} \qquad (3)$$

wherein D = pipe diameter [m], and $\eta$ = molar viscosity [kg m$^{-1}$ s$^{-1}$].

Hereinafter, for the sake of typographic simplicity, $\langle v \rangle$ isreplaced by v. The following holds good for an incompressible fluid:

3

$$\int_1^2 \frac{1}{\rho} dp = \frac{1}{\rho} (p_2 - p_1) \qquad (4)$$

The friction term $A_{fr}$ comprises the sum of all the losses in accessories (such as bends, changes in pipe diameter, valves) and the friction on the wall. The following holds good for a single accessory:

$$A_{fr} = K_r \tfrac{1}{2} v^2 \qquad (5)$$

wherein $K_r$ = resistance number.

The resistance number in practical cases is independent of Re (example: for a sharp bend of 90° it applies that $K_r$ = 1.5). The friction on the wall of a straight round pipe can be determined from:

$$A_{fr} = 4f \frac{L}{D} \frac{1}{2} v^2 \qquad (6)$$

where L = length of pipe [m], and f = friction factor on the wall, which friction factor generally is a function of Re and the geometry.

For the friction terms, the downstream flow velocity is most often used. For a pipe having a smooth wall and 4000<Re<100000, the Blasius formula applies:

$$4f = 0.316 Re^{\frac{1}{4}} \qquad (7)$$

The Hagen-Poiseuille formula gives a relationship between volume flow and pressure drop for a straight horizontal pipe in the case of laminar (i.e. not turbulent) flow:

$$Q_v = \frac{\pi R^4 (p_2 - p_1)}{8 \eta L} \qquad (8)$$

wherein $Q_v$ = volume flow [$m^3\ s^{-1}$] and R = pipe radius [m].

Finally, there is the following general relationship between volume flow, mass flow and flow velocity:

$$Q_v = \frac{Q_m}{\rho} = v \pi R^2 \qquad (9)$$

The expanded Bernoulli equation (formula 1) now becomes:

$$O = -[\frac{1}{\rho} (p_2 - p_1) + g(h_2 - h_1) + \frac{1}{2}(v_2^2 - v_1^2)] Q_m + W - A_{fr} Q_m \qquad (10)$$

For the further part of the derivation of the model, the reader is referred to Figure 1b. Herein, 10 and 11 designate a fluid reservoir; 12 a supply line; 13 a deaerator; 14 the pump; 15 a filter; 16 a flowmeter; 17 a discharge line, and the number 1 to 7 inclusive each indicate different measuring points.

In order to define the analytical model, by means of which the mass flow rate can be determined, it is assumed that the pressure differential sensor is, for practical reasons, positioned between the points 3 and 5, that the difference in level between the points 3 and 5 is negligible, that the line diameter at point 3 is 50 mm and at point 5 is 70 mm, and that the deaerator works so effectively that the test fluid can be regarded as incompressible.

4

When the pump motor is used at high speed, the volumetric flow rate is approximately 500 l/min. For the line this gives $v \approx 4.2$ m/s and $Re = 2 \cdot 10^6$; the flow is therefore certainly turbulent, and so the Hagen-Poiseuille formula (see formula (8)) cannot be used. The friction term on the wall between the pressure measuring points can be regarded as being small with respect to the losses due to fittings in the same measuring section.

The Bernoulli equation (formula 10) can now be used by replacing the subscripts 2 and 1 by 5 and 3, respectively, by assuming the sum of all friction terms to be proportional to the square of the flow velocity, and by converting all the flow velocities at the various points in the system to the flow velocity at one fixed point. The latter is possible because it is known that at each point in the system, at a given time, the flow rate is equal. It is also assumed that some of the total power taken up by the motor is not used for pumping the liquid.

With

$$
\begin{aligned}
v_2^3 &= A_1 v^2 \\
v_5^2 &= A_2 v^2 \\
\Sigma K_r \frac{1}{2} v_5^2 &= A_3 v^2 \\
p_5 - p_3 &= \Delta p \\
W &= W_m - W_o \\
h_5 - h_3 &= 0
\end{aligned}
\tag{11}
$$

wherein

- $v$ = flow velocity at freely selectable point $[ms^{-1}]$
- $A_1, A_2$ = cross-section conversion factors
- $A_3$ = friction constant
- $W_m$ = total real motor power $[kg\ m^2\ s^{-3}]$
- $W_o$ = dissipated pump power $[kg\ m^2\ s^{-3}]$

the Bernoulli equation can be rewritten to give:

$$
W_m - W_o = \frac{Q_m \Delta p}{\rho} + A \frac{Q_m^3}{\rho^2}
\tag{12}
$$

wherein $A = (\frac{1}{2}A_2 - \frac{1}{2}A_1 + A_3)/F^2$ $[m^{-4}]$, and $F$ = cross-section $[m^2]$ at position $v$.

Formula (12) is the analytical model sought, by which the relationship between, inter alia, the pump power and the mass flow rate or volumetric flow rate is described. The last term of the model will hereinafter be referred to as the correction term, and A as the correction factor.

With the aid of the analytical model obtained from the abovementioned derivation, it is possible to calculate, surprisingly, in a measuring device, the flow rate of the pumped fluid as a function of time, solely by measuring the total real motor power taken up by the pump and the pressure differential across the pump. In so doing it is assumed that the no-load or dissipated power (i.e. loss of power) of the pump and the correction factor are constants. Likewise, the density is measured separately or assumed to be constant. Thence it is possible, at the same time, to determine the total amount in terms of mass or in terms of volume of the pumped fluid.

In the block diagram of the device according to the invention shown in Figure 2, 14 designates the pump with pump motor incorporated in a line 12, 17; 22 the power monitor connected to the pump; 23 and 24 two pressure measuring points which are connected to a pressure differential sensor 21 or to two separate pressure sensors. 26 designates the processing unit in which the said analytical model is defined. In the power monitor, the total real power taken up by the pump can be determined for example by measurement of the electrical voltage, current and loss angle. Also here, the dissipated or no-laod power $W_o$ can be determined, and be corrected if required, by measurement of the speed of rotation of, and by measurement of the torque on, the pump axis in accordance with the equation $W_o = n.M/c$, wherein $n$ = speed of rotation, $M$ = torque and $c$ = a factor.

5

If it is assumed that the fluid is incompressible, it is possible to calculate the flow rate in said processing unit 26 on the basis of the measured total taken-up power and the measured pressure drop. To this end, the density or specific gravity of the fluid can be measured in a separate meter 25 incorporated in the line. Alternatively, for certain applications a fixed density can be assumed, such as in a mobile milk collection vehicle for the milk.

On the basis of experimental measurements carried out it was found that with the aid of the abovementioned method and device, flow rates can be measured on the basis of total pump power and pressure drop, with an inaccuracy of only a few per cent. At higher flow rates, in particular, an inaccuracy of as little as approximately 1% is achieved.

In a further embodiment, it is possible to incorporate a calibration- or adaptation circuit in the processing unit 26 in order -upon variation of the flow rate in a certain range- to calibrate or change the correction factor A, i.e. make it flow rate dependent, resulting thereby in still more accurate measurements.

## Claims

1.  Method for determining the flow rate of an essentially incompressible fluid pumped in a line by a pump having a pump motor, which comprises the steps of measuring the total power taken up by the pump motor, measuring the pressure differential which occurs across the pump, introducing the measured values of said power and said pressure differential into a model derived from transport physics, and then calculating, by means of this model, the flow rate as a function of time.

2.  Method according to claim 1, wherein the model derived from transport physics is represented by:

$$W_m - W_o = \frac{Q_m \Delta p}{\rho} + A \frac{Q_m^3}{\rho^2},$$

    wherein

    $W_m$ = power absorbed by pump motor [kg m$^2$ s$^{-3}$]
    $W_o$ = dissipated power of pump [kg m$^2$ s$^{-3}$]
    $Q_m$ = mass flow rate [kg s$^{-1}$]
    $\Delta p$ = pump pressure differential [kg m$^{-1}$ s$^{-2}$]
    $\rho$ = density, and [kg m$^{-3}$]
    $A$ = correction factor [m$^{-4}$],

    the dissipated power $W_o$ and the correction factor A being assumed to be constant and the density $\rho$ being determined separately, so that the volumetric flow rate $Q_v$ is determined at the same time from $Q_v = Q_m/\rho$.

3.  Method according to claim 2, wherein the density of the fluid is measured in a densimeter in the line.

4.  Method according to claim 2, wherein the mass flow rate [kg s$^{-1}$] or the volumetric flow rate [m$^3$ s$^{-1}$] is used to determine, by integration over time, the amount in terms of mass [kg] or the amount in terms of volume [m$^3$].

5.  Device for implementing the method according to claim 1, for determining the flow rate of an essentially incompressible fluid pumped in a line by a pump having a pump motor, which comprises a pump incorporated in the line and having a pump motor, a measuring element for measuring the total power taken up by the pump motor, a pressure differential sensor for measuring the pressure differential across the pump, and a processing unit wherein, based on the model derived from transport physics and the power and the pressure differential measured, the flow rate is calculated as a function of time.

6.  Device according to claim 5, provided with a densimeter incorporated in the line.

7.  Device according to claim 5, wherein the pressure differential sensor is composed of two separate pressure sensors positioned on each side of the pump.

8. Device according to claim 5, wherein the processing unit is embodied for measurement of electrical voltage, current and loss angle in order to determine the total power taken up by the pump motor.

9. Device according to claim 5, further provided with a speed of rotation meter and a torque meter for measurement respectively of the speed rotation of and the torque on the pump axis in order to determine the dissipated power of the pump motor.

10. Device according to claim 5, for use in a mobile milk reception vehicle to determine the amount in terms of weight of the milk collected for each supplier.

11. Device according to claim 5, for use as a monitoring unit for monitoring the correct action of pump and pump motor.

fig-1a

fig-1b

fig-2

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP-A-0 403 806 (WILO-WERK) 27 December 1990 <br> * column 4, line 30 - line 42; figure 1 * <br> --- | 1,5 | G01F1/34 <br> G01F1/36 |
| A | FR-A-2 285 597 (AGENCE NATIONALE DE VALORISATION DE LA RECHERCHE) 16 April 1976 <br> * page 4, line 9 - page 9, line 32; figures 1-5 * <br> --- | 1,5 | |
| A | FR-A-2 325 025 (THE BATTELLE DEVELOPMENT CORPORATION) 15 April 1977 <br> * page 6, line 27 - page 10, line 8; figure 3 * <br> --- | 1,5 | |
| A | MACHINE DESIGN, <br> vol. 62, no. 18, September 1990 CLEVELAND US, <br> pages 103-107, <br> G. BLOOM 'ACCURATELY MEASURING ULTRALOW FLOW' <br> * page 107, left column; figure * <br> --- | 1,5 | |
| A | GB-A-1 349 054 (PLESSEY) 27 March 1974 <br> * page 1, line 84 - line 90; figure * <br> ----- | 4 | **TECHNICAL FIELDS SEARCHED (Int.Cl.6)** <br><br> G01F <br> F04D |

The present search report has been drawn up for all claims

| Place of search | Date of completion of the search | Examiner |
|---|---|---|
| THE HAGUE | 24 July 1995 | Heinsius, R |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)